# EUROPÄISCHE PATENTSCHRIFT

(11) **EP 0 896 665 B1**
(45) Veröffentlichungstag und Bekanntmachung des Hinweises auf die Patenterteilung: **24.07.2002**
(21) Anmeldenummer: 97918153.4
(22) Anmeldetag: 23.04.1997
(51) Int. Cl.: G01N 21/76

(54) **BILDAUFNAHMESYSTEM ZUR AUSWERTUNG ANALYTISCHER TESTELEMENTE**
IMAGE RECORDING SYSTEM FOR EVALUATING ANALYTICAL TEST ELEMENTS
SYSTEME DE PRISE DE VUES POUR L'EVALUATION D'ELEMENTS D'ESSAIS ANALYTIQUES

(30) Priorität: 23.04.1996 DE 19616151
(43) Veröffentlichungstag der Anmeldung: 17.02.1999
(73) Patentinhaber: Roche Diagnostics GmbH, 68298 Mannheim (DE)
(72) Erfinder: GUTEKUNST, Martin, D-82390 Eberfing (DE); HÖLTKE, Hans-Joachim, D-82377 Penzberg (DE)
(86) Internationale Anmeldenummer: EP9702065
(87) Internationale Veröffentlichungsnummer: WO9740368

(56) Entgegenhaltungen:
- EP-A- 0 724 153
- WO-A-95/24642
- US-A- 4 948 975
- US-A- 5 567 294

## Beschreibung

Die vorliegende Erfindung betrifft ein Bildaufnahmesystem zur Bildaufnahme und Auswertung analytischer Testelemente beinhaltend eine Aufnahmeeinheit für Testelemente, ein Linsensystem, das ein Testelement in der Aufnahmeeinheit auf einen CCD-Chip abbildet, einen CCD-Chip, der ein Bild des Testelementes aufnimmt und an eine Auswerteeinheit weiterleitet sowie eine Auswerteeinheit, die die Signale des CCD-Chips in eine Darstellung eines Bildes des Testelementes umwandelt, wobei der Fokus des Linsensystems fest eingestellt ist und das Linsensystem eine Verkleinerungsoptik mit einer bildseitigen Apertur von mindestens 0,7 ist, der Abstand zwischen CCD-Chip und nächster Linse des Linsensystems kleiner als 15 mm ist und dieser Abstand auf mindestens 10 µm konstant gehalten wird.

Die vorliegende Erfindung fällt insbesondere in das Gebiet der molekularen Biologie, bei der Biomoleküle mit einer Markierung oder Anfärbung nachgewiesen werden sowie ihre Lage auf einem meist flächigen Analyseträger bestimmt wird.

Biomoleküle im Sinne der Erfindung sind insbesondere Nukleinsäuren, Nukleinsäurefragmente und Proteine.

Das Labelling (Markierung) und die Detektion von Nukleinsäuren und Proteinen ist eine Standardtechnik, die in den meisten biochemischen, biologischen oder bio-medizinischen Laboratorien durchgeführt wird.

Biomoleküle können in der Praxis auf drei verschiedene Arten direkt markiert werden:
1. Durch Radioisotope,
2. durch Fluoreszenzfarbstoffe,
3. durch kolloides Gold.

Meist erfolgt aufgrund der höheren Sensitivität aber ein indirekter Nachweis, indem die Biomoleküle mit einem Hapten oder Biotin markiert und dann anschließend über Antikörper oder Streptavidin detektiert werden.

Die Nachweisproteine (Antikörper oder Streptavidin) sind dann meist zur Erreichung höherer Nachweisempfindlichkeiten mit Enzymen, wie Alkalische Phosphatase oder Meerrettich-Peroxidase, gekoppelt, welche über geeignete Substrate eine Farb- oder Chemilumineszenzreaktion katalysieren. Diese Reaktionen dienen letztendlich dem Nachweis.

Im Bereich der Markierung von Nukleinsäuren werden radioaktive Methoden auch heute noch wesentlich mehr eingesetzt als nicht-radioaktive Methoden, obwohl sie die mit radioaktiven Isotopen verbundenen Nachteile aufweisen. Hauptsächliche Nachteile sind die kurze Halbwertzeit der Isotope sowie die von radioaktiven Isotopen ausgehenden Gefährdungen der Gesundheit und Umwelt. Aus diesem Grunde wurden alternative Methoden ohne radioaktive Isotope für die Markierung von Biomolekülen entwickelt. Eine Möglichkeit ist es, Biomoleküle direkt mit Fluoreszenzfarbstoffen zu koppeln, die dann durch Fluoreszenzmikroskopie nachgewiesen werden können. Im Bereich der Biochemie sind jedoch sogenannte Blotting-Verfahren (Southern-, Northern- und Dot-Blots für Nukleinsäuren und Western Blots für Proteine) gebräuchlich. In der Regel sind Fluoreszenzsfarbstoffe für diese Anwendungsgebiete nicht sensitiv genug, da Probleme mit dem Signalhintergrund und der Eigenfluoreszenz der verwendeten Blotting-Membranen auftreten. Eine nicht-radioaktive Detektion auf solchen Membranen ist jedoch durch direkte oder indirekte Bindung der Proteine an Enzyme, wie alkalische Phosphatase oder Peroxidase, möglich. Solche Enzyme katalysieren eine Aussendung von Chemilumineszenzlicht bei Zugabe geeigneter Substrate. Analog können Nukleinsäuren mit Haptenen, wie z. B. Digoxigenin oder Biotin, vorgenommen werden und diese Label mit spezifischen Antikörpern, die ihrerseits an Enzyme gebunden sind, nachgewiesen werden.

Bei Verfahren, in denen direkt ein Farbstoff nachgewiesen wird, kann ein Bild der Membran visuell ausgewertet oder mit Standardvorrichtungen fotografiert werden. Vorzugsweise wird für die oben beschriebenen Detektionsprozesse jedoch eine Chemilumineszenzreaktion eingesetzt, da sie sehr schnell und sehr sensitiv ist. Es hat sich herausgestellt, daß ein Nachweis über die Chemilumineszenzreaktion mindestens so sensitiv ist wie radioaktive Nachweise, dabei aber wesentlich schneller durchgeführt werden kann. Derzeit werden Chemilumineszenzsignale durch Auflegen eines Röntgenfilmes auf Membranen aufgezeichnet. Röntgenfilme haben den Vorzug, daß sie eine sehr gute Auflösung besitzen und auch relativ große Objekte, z. B. Blots einer Größe von 40 x 30 cm, ausgewertet werden können. Ein Nachteil von Röntgenfilmen ist jedoch ihr kleiner Dynamikbereich, der etwa zwei Größenordnungen beträgt und somit wenig geeignet ist, starke und schwache Signale auf dem gleichen Film zu unterscheiden. Aus diesem Grunde sind eine Vielzahl von Aufnahmen an dem gleichen analytischen Testelement notwendig, wenn eine Quantifizierung der Signale gewünscht wird. Ein weiterer Nachteil von Röntgenfilmen liegt darin, daß ein spezielles Labor sowie spezielle Chemikalien zur Entwicklung erforderlich sind und die Chemikalien nach Gebrauch entsorgt werden müssen.

Im Stand der Technik sind sogenannte Phosphorimager bekannt, die zum Teil auch Lumineszenzbilder aufnehmen. Die Phosphorimager sind jedoch aufgrund ihres hohen Preises sowie des relativ kleinen Dynamikbereichs und der geringen Ortsauflösung nachteilig.

Weiterhin werden auf dem Markt bereits gekühlte CCD-Kameras zur Auswertung von Lumineszenzreaktionen angeboten. Ein Bildaufnahmesystem beinhaltend eine CCD-Kamera mit Linsensystem, die mit einer Auswerteeinheit verbunden ist, ist aus US-A-4 948 975 bekannt. Bekannte Geräte besitzen jedoch den Nachteil, daß für verschiedene Objektgrößen, die ausgewertet werden sollen, unterschiedliche Optiken verwendet werden müssen. Außerdem ist bei diesen Geräten eine Fokussierung der Optik notwendig. Da in biochemischen Laboratorien eine große Zahl von analytischen Testelementen, wie Blots und Gelen, ausgewertet werden, ist eine Fokussierung zeitraubend und für den Operateur unbequem.

Aufgabe der vorliegenden Erfindung war es, ein System zur Auswertung analytischer Testelemente bereitzustellen, das eine hohe Sensitivität bei ausreichendem Dynamikbereich liefert und auch die Auswertung unterschiedlicher Testelemente ermöglicht, ohne daß eine Fokussierung notwendig ist.

Die vorstehend genannte Aufgabe wurde gelöst durch ein Bildaufnahmesystem zur Auswertung analytischer Testelemente gemäß Anspruch 1. Insbesondere wurde gefunden, daß die Aufgabe gelöst werden kann, wenn ein spezielles Linsensystem gewählt wird, das bildseitig eine hohe Apertur und einen geringen Abstand zum Sensor aufweist. Damit verbunden ist jedoch bildseitig eine sehr geringe Tiefenschärfe. Ein erfindungsgemäßes Linsensystem besitzt objektseitig eine hohe Tiefenschärfe, wodurch eine Fokussierung vermieden werden kann, wenn eine Aufnahmeeinheit für die Testelemente vorhanden ist, die den Abstand von Testelement und Linsensystem im wesentlichen festlegt. Aufgrund der großen objektseitigen Tiefenschärfe des verwendeten Linsensystems fallen Schwankungen des Abstands zwischen Linsensystem und Testelement durch Dickenschwankungen des Testelementes nicht ins Gewicht. Das mit einem erfindungsgemäßen Linsensystem verbundene Problem, daß die Tiefenschärfe bildseitig sehr gering ist, wurde erfindungsgemäß durch Verwendung eines Kompensators gelöst, der Abstandsschwankungen zwischen Linsensystem und CCD-Chip ausgleicht. Ein weiterer Vorteil des erfindungsgemäßen Systems liegt in einer Vereinfachung der quantitativen Auswertung durch einen konstanten Abbildungsmaßstab.

Das erfindungsgemäße Bildaufnahmesystem dient zur Bildaufnahme und Auswertung analytischer Testelemente. Solche Testelemente sind beispielsweise Membranen, auf denen Blotting-Reaktionen durchgeführt werden oder auch Gele, wie sie beispielsweise zur DNA-Sequenzierung verwendet werden. Erfindungsgemäß sind jedoch auch solche Testelemente geeignet, auf denen sich fluoreszierende oder gefärbte Analyten befinden. Das in dem Bildaufnahmesystem verwendete Linsensystem ist so ausgelegt, daß die Vorteile insbesondere für Testelemente mit einer Größe oberhalb ca. 4 x 4 cm erzielt werden.

Die Aufnahmeeinheit für flächige Testelemente kann beispielsweise eine Platte sein, auf die die Testelemente aufgelegt werden. Vorzugsweise besitzt die Aufnahmeeinheit jedoch die Gestalt einer Schublade, auf deren Bodenfläche die Testelemente aufgelegt und mit der Schublade in das Bildaufnahmesystem eingeschoben werden. Eine Aufnahmeeinheit kann beispielsweise auch aus Führungsnuten bestehen, in die das Testelement, gegebenenfalls auf einem Träger, eingeschoben wird. Erfindungsgemäß erfüllt die Aufnahmeeinheit die Funktion, die Testelemente in einem im wesentlichen konstanten Abstand zu dem Linsensystem in der Weise anzuordnen, daß die Untersuchungsfläche des Testelements senkrecht zur optischen Achse des Linsensystem angeordnet ist und das Testelement lateral so positioniert wird, daß der auszuwertende Bereich erfaßt wird. Aufgrund der speziellen verwendeten Optik mit hoher objektseitiger Tiefenschärfe ist der Abstand zwischen Testelement und Linsensystem jedoch wenig kritisch, so daß Schwankungen im Bereich von einigen Millimetern in Kauf genommen werden können. Hierin liegt auch ein wesentlicher Vorteil des erfindungsgemäßen Bildaufnahmesystems, da verschiedene Arten von Testelementen unterschiedliche Dicken aufweisen und auch die Dicke von Testelementen der gleichen Art schwanken kann. Erfindungsgemäß kann daher ein hinreichend scharfes Bild von Testelementen aufgenommen werden, auch ohne daß eine Fokussierung auf das spezielle, im System befindliche Testelement erfolgen muß.

Es wurde gefunden, daß ein derartiges System realisiert werden kann, wenn der Abstand zwischen Optik und CCD-Chip sehr klein gewählt wird und die Apertur des Linsensystems auf der dem CCD-Chip zugewandten Seite gegenüber herkömmlichen Systemen vergrößert wird. Erfindungsgemäß ist der Abstand zwischen der letzten Linsenfläche des Linsensystems und dem CCD-Chip kleiner als 15 mm, vorzugsweise kleiner als 12 mm. Der Radius der Blende des Linsensystems auf der dem CCD-Chip zugewandten Seite ist erfindungsgemäß größer als 25 mm, vorzugsweise größer als 30 mm. Um die in der Praxis auftretenden Testelementgrößen oberhalb 20 x 20 cm² geeignet auf gängige CCD-Chips abbilden zu können, ist das Linsensystem als Verkleinerungsoptik 1:n mit n größer 10, vorzugsweise größer 14 ausgelegt. Typischerweise besitzt das Linsensystem objektseitig eine Brennweite von 850 mm und ein Öffnungsverhältnis von 0,95. Das Öffnungsverhältnis ist durch den Quotienten aus Brennweite der Optik zum Durchmesser Eintrittspupille gegeben.

Die bildseitige Apertur des Linsensystems beträgt mindestens 0,7, bevorzugt mindestens 1,0. Unter bildseitiger Apertur wird der Winkel der gesamten Eintrittspupille in RAD aus der Bildebene gesehen, verstanden.

Um bei einem wie oben beschriebenen Objektiv Verzerrungen möglichst gering zu halten und eine hohe Lichtstärke zu erzielen, muß der CCD-Chip möglichst nahe an das Linsensystem herangebracht werden. Die mit einer solchen Anordnung verbundene sehr geringe Brennweite wirft das Problem auf, daß der Abstand zwischen CCD-Chip und der Hauptachse des Linsensystem extrem genau eingestellt und konstant gehalten werden muß. Bei dem erfindungsgemäß verwendeten Abstand kleiner als 15 mm bzw. vorzugsweise kleiner als 12 mm muß der Abstand auf mindestens 10 µm, besser auf 7 µm konstant gehalten werden, um eine Defokussierung zu verhindern. Diese Anforderung macht einen speziellen Aufbau der Halterung von Bildaufnahmesystem und CCD-Chip notwendig. Im Zusammenhang mit dem Kompensator werden weiter unten Möglichkeiten beschrieben, eine derartige Abstandskonstanz zu realisieren.

Um eine ausreichend hohe Sensitivität und Auflösung von Objekten zu erreichen, werden vorzugsweise CCD-Chips mit mehr als 1000 x 1000 Pixeln und Pixelgrößen von vorzugsweise mehr als 15 x 15 µm verwendet. Geeignete CCD-Chips sind im Handel erhältlich und werden daher an dieser Stelle nicht weiter beschrieben.

Die vom CCD-Chip aufgenommenen Bilder der Testelemente werden an eine Auswerteeinheit weitergeleitet. Eine solche Auswerteeinheit ist in der Regel ein Mikroprozessor, der mit einer Einheit zur Signalumwandlung ausgerüstet ist. Derartige Einheiten werden als "framegrabber" bezeichnet. Bei der Auswertung der Bilder wird versucht, dem Anwender eine Software zu bieten, die für die jeweilige Problemstellung passend ist. Bei der Auswertung von Elektrophoresegelen kann die Software beispielsweise dazu dienen, die Banden der auf dem Gel gewanderten Analyten graphisch darzustellen und auch zu quantifizieren.

In der Regel wird der Anwender eines erfindungsgemäßen Bildaufnahmesystems daran interessiert sein, ein Bild des Testelementes zu erhalten, auf dem die Analyten sichtbar sind. Zu diesem Zweck erzeugt die Auswerteeinheit ein Bild des Testelementes und gibt dieses beispielsweise auf einem Monitor oder einem Drucker aus.

Wie bereits erwähnt, ist der Abstand zwischen Linsensystem und CCD-Chip ungewöhnlich klein und es müssen Vorkehrungen getroffen werden, damit dieser Abstand auf mindestens 10 µm besser auf 7 µm konstant gehalten wird. Erfindungsgemäß kann diese hohe Abstandskonstanz erreicht werden, wenn die Halterungen für CCD-Chip und Linsensystem sowie die übrigen Materialien, die dem Abstand zwischen diesen Einheiten definieren, durch sogenannte Invar-Stähle realisiert werden, die extrem geringe thermische Ausdehnungskoeffizienten besitzen. Da diese Invar-Stähle jedoch kostspielig sind und auch ihre Bearbeitung aufwendig ist, sind erfindungsgemäß andere Möglichkeiten bevorzugt, um die Abstandskonstanz zu erreichen.

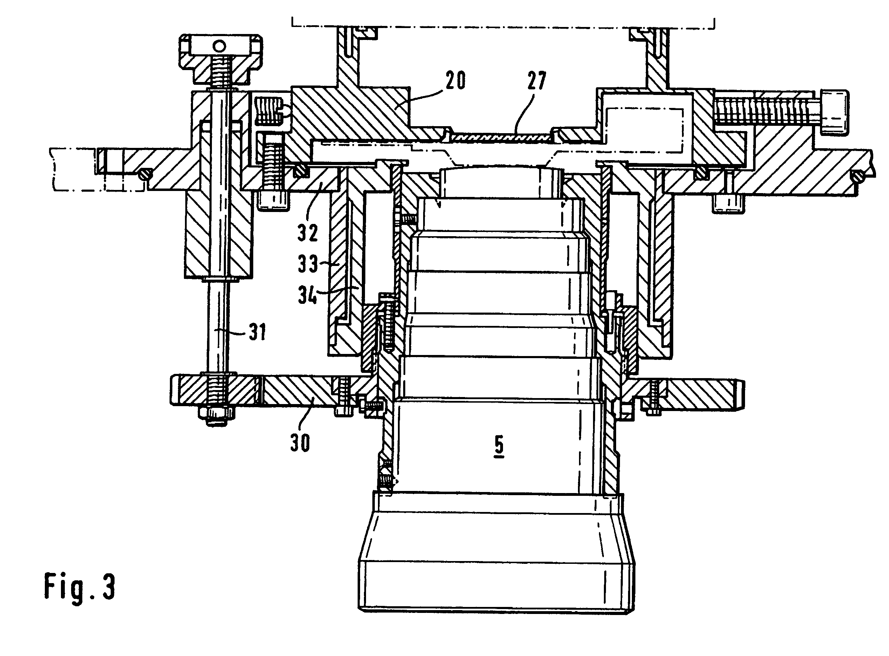

Als besonders günstig hat es sich herausgestellt, wenn ein Kompensator verwendet wird, der thermisch bedingte Abstandsänderungen von Linsensystem und CCD-Chip durch eine entgegengerichtete Längenänderung ausgleicht. Dies kann beispielsweise durch eine Anordnung erreicht werden, bei der der CCD-Chip auf dem Kompensator lagert, der seinerseits auf der Halterung des Linsensystems lagert. Die Anordnung wird so gewählt, daß bei einer Temperaturänderung die Längenänderungen der Gehäuse und die des Kompensators vektoriell entgegengesetzt sind. Allgemein wird der Kompensator so angeordnet, daß eine thermisch bedingte Abständsänderung zwischen CCD-Chip und Linsensystem durch eine Längenänderung des Kompensators ausgeglichen wird. Die Funktionsweise des Kompensators wird in Figur 3 anhand eines Beispieles näher erläutert.

Neben dem bereits beschriebenen Kompensator, der ohne eine Messung des Abstandes zwischen Linsensystem und CCD-Chip auskommt, können auch Kompensatoren verwendet werden, die aufgrund einer vorhergehenden Messung des Abstandes eine Korrektur vornehmen. Derartige Kompensatoren können beispielsweise Motorantriebe, Piezoantriebe oder Hydrauliken sein. Erfindungsgemäß erfolgt jedoch keine Verdrehung des Linsensystems, um eine Fokussierung zu erreichen, wie dies beispielsweise bei photographischen Kameras der Fall ist. Vielmehr nehmen erfindungsgemäße Kompensatoren eine direkte lineare Abstandsänderung vor. Für die notwendigen Längenänderungen im Mikrometerbereich sind insbesondere Piezoelemente geeignet.

Als vorteilhaft hat es sich herausgestellt, wenn der CCD-Chip im Vakuum eingekapselt ist. Eine solche Anordnung verhindert das Eindringen von Staub oder Feuchte. Weiterhin hat es sich als vorteilhaft herausgestellt, in die Einkapselung ein Feuchte absorbierendes Material, wie z. B. Kieselgel, einzubringen, um Restfeuchte, die sich auf den Linsen oder dem Sensor niederschlagen könnte, zu entfernen. Weiterhin ist es vorteilhaft, das optische Fenster der Einkapselung zu beheizen, um ein Niederschlagen von Feuchte auf diesem Fenster zu verhindern. Weiterhin ist es vorteilhaft, auch den Raum zwischen dem vorstehend genannten Fenster und dem Linsensystem einzukapseln (beispielsweise N₂-Atmosphäre), um eine Wärmeabfuhr und ein Eindringen von Feuchte oder Staub zu verhindern.

Die objektseitige Fokuslänge ist bei einem Linsensystem gemäß der vorangehenden Beschreibung relativ stark abhängig von der verwendeten Lichtwellenlänge. Es hat sich daher als äußerst vorteilhaft herausgestellt für Messungen bei verschiedenen Wellenlängen, eine Aufnahmeeinheit zu wählen, die mehrere Aufnahmepositionen in unterschiedlichen Abständen von dem Linsensystem besitzt. Erfindungsgemäß kann auch eine Aufnahmeeinheit verwendet werden, die in Abhängigkeit von der für die Untersuchung verwendeten Wellenlänge eine Abstandsänderung zwischen Testelement und Linsensystem vornimmt. Dies kann beispielsweise durch einen motorgetriebenen Tisch realisiert werden. Bei den analytischen Verfahren, für die das erfindungsgemäße Bildaufnahmesystem in erster Linie konstruiert wurde, wird in der Regel das Licht einer einzelnen Wellenlänge bzw. eines relativ schmalen Wellenlängenbandes ausgewertet. Bei Lumineszenzreaktionen tritt normalerweise Licht nur einer Wellenlänge auf, das detektiert wird. Entsprechend ist es bei Fluoreszenzreaktionen, wo mit einer ersten Wellenlänge eingestrahlt und das Fluoreszenzlicht einer zweiten Wellenlänge detektiert wird. Durch eine spezifische Auswertung des Lumineszenz- bzw. Fluoreszenzlichtes ist es möglich, den Signaluntergrund gering zu halten. Vorteilhaft wird daher das erfindungsgemäße Bildaufnahmesystem mit Spektralfiltern ausgestattet, die für das auszuwertende Licht durchlässig sind, jedoch Hintergrundstrahlung herausfiltern.

Erfindungsgemäß ist es auch vorgesehen, daß das System ein lichtdichtes Gehäuse besitzt, das ein Eindringen von Umgebungslicht verhindert. Für Fluoreszenzmessungen kann innerhalb dieses Gehäuses eine Beleuchtungseinheit zur Anregung der Fluoreszenzstrahlung vorgesehen werden.

Die vorliegende Erfindung wird anhand der folgenden Figuren näher erläutert:
- Figur 1:: Bildaufnahmesystem
- Figur 2:: Eingekapselter CCD-Chip
- Figur 3.: Linsensysten und CCD-Chip
- Figur 4:: Schematische Darstellung einer Aufnahmeeinheit mit mehreren Aufnahmepositionen
- Figur 5:: Defokussierung der Optik für verschiedene Wellenlängen
- Figur 6:: Bildschirmphotographie der Auswertung eines DNA Chemilumineszenz Blots

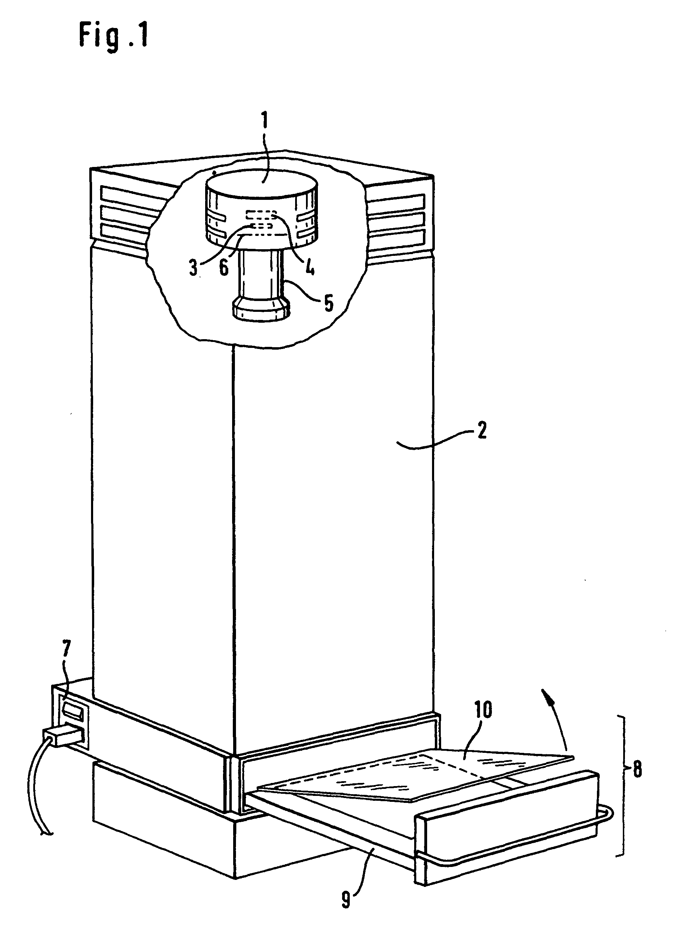

Figur 1 zeigt die Darstellung eines erfindungsgemäßen Bildaufnahmesystems. Die Optikeinheit (1) befindet sich im oberen Teil des Gehäuses (2). Innerhalb der Optik (1) befindet sich der CCD-Chip (3), der durch eine Anordnung von Peltierelementen (4) gekühlt wird. Die von den Peltierelementen (4) abgegebene Wärme wird durch ein Gebläse abgeführt. Zwischen Linsensystem (5) und CCD-Chip (3) befindet sich ein Verschluß (6), durch den ein Lichteinfall auf den CCD-Chip verhindert werden kann, wenn keine Messung durchgeführt wird. Im unteren Bereich des Bildaufnahmesystems befindet sich die Stromversorgung (7) sowie die Aufnahmeeinheit (8) für Testelemente. Die dargestellte Aufnahmeeinheit besitzt die Form einer Schublade, die aus dem Gehäuse herausgezogen werden kann. Die zu untersuchenden Testelemente werden auf die Bodenfläche (9) der Schublade aufgelegt und mit der Schublade in das Gehäuse eingeschoben. Um ein planes Aufliegen der Testelemente auf der Bodenfläche zu gewährleisten, ist weiterhin eine Glasplatte (10) vorgesehen, die sich beim Herausziehen der Schublade auf einer Seite anhebt, so daß ein Testelement darunter geschoben werden kann. Beim Einschieben der Schublade senkt sich die Glasplatte ab und drückt das Testelement auf die Bodenfläche (9) der Schublade.

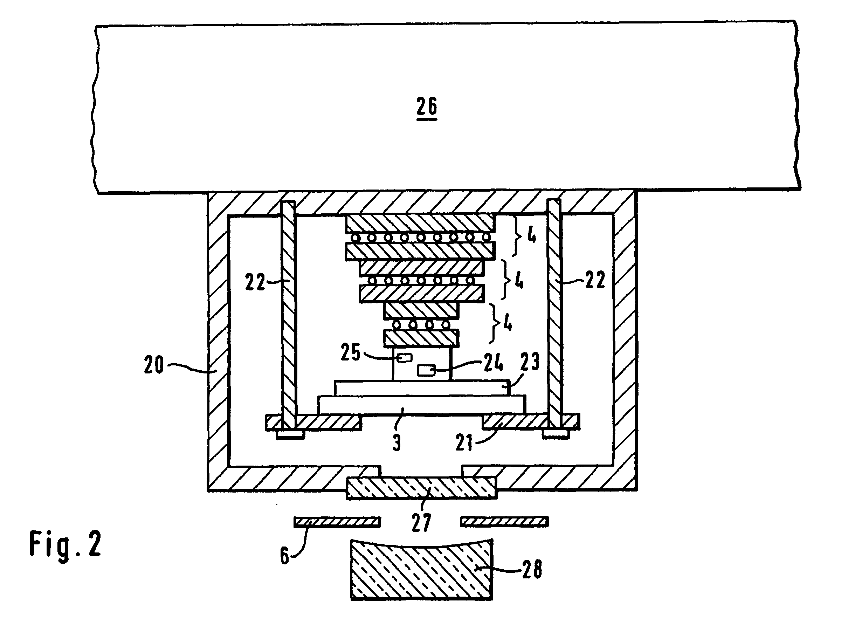

Figur 2 zeigt den Bereich des CCD-Chips (3) mit Temperiervorrichtungen innerhalb der Einkapselung (20). Der CCD-Chip (3) befindet sich auf einer Halterung (21), die ihrerseits über Abstandshalter (22) mit der Einkapselung (20) verbunden ist. Der CCD-Chip (3) ist auf der Halterung (21) so befestigt, daß er durch Drehung um die optische Achse justiert und in der Justierposition fixiert werden kann. Durch die Abstandshalter (22) wird der CCD-Chip auf dem Kühlblock (29) fixiert. Eine entsprechende Gestaltung des Kühlblocks gewährleistet eine senkrechte Lage des Chips zur optischen Achse. Der Kühlblock enthält den Heizwiderstand (24) und den Temperaturfühler (25). Oberhalb des CCD-Chips (3) befindet sich ein Montagerahmen (23) mit dem der CCD-Chip auf den Kühlblock (29) gepreßt wird.

Oberhalb des CCD-Chips (3) befindet sich eine weitere Montageplatte (23), über die der CCD-Chip mit dem Kühlblock (29) verbunden ist. Die Einheit aus Temperaturfühler und Heizwiderstand ist thermisch leitend und wird über eine Kaskade von Peltierelementen (4) gekühlt. Das oberste Peltierelement gibt die abgeführte Wärme an die Einkapselung (20) und die Einkapselung ihrerseits an ein Kühlblech (26) ab. Das Kühlblech wird wie bereits erwähnt vorzugsweise über einen Lüfter gekühlt.

An der Unterseite der Einkapselung ist ein optisches Fenster (27) zu erkennen. Zwischen dem optischen Fenster (27) und der ersten Linse (28) des Linsensystems (5) befindet sich der Verschluß (6).

Figur 3 zeigt die Einkapselung (20) mit dem Fenster (27) und insbesondere das sich an die Einkapselung anschließende Linsensystem mit Halterung. Das Linsensystem ist über einen "Trompentenaufbau" bestehend aus dem Aluminiumzylinder (34) und dem Stahlzylinder (33) mit der Grundplatte (32) verbunden. Die Flanschplatte (32) ist an der Einkapselung (20) angeflanscht.

An der Flanschplatte (32) ist der Stahlzylinder (33) befestigt (Stelle 35)). Der Aluminiumzylinder (34) ist an der dem Flansch entfernten Seite am Stahlzylinder befestigt (Stelle 36)) und liegt in der Flanschebene lediglich am Stahlzylinder auf (Stelle 37)). Die Optik (5) ist im flanschnahen Bereich am Aluminiumzylinder befestigt und wird am anderen Ende des Aluminiumzylinders lediglich geführt (siehe Führung 39). Bei thermisch bedingten Längenänderungen der Halterungsanordnung (umfassend Einkapselung, Flanschplatte, Haltestifte, Halteplatte usw.) werden diese durch eine Längenänderung des Aluminiumzylinders kompensiert. Das in dieser Anordnung verwirklichte Prinzip besteht darin, daß eine Längenänderung der Halterungsanordnung durch eine Längenänderung eines Kompensationselementes (in diesem Fall Aluminiumzylinder) kompensiert wird. Hierzu ist es erforderllich, daß die Längenänderung des Kompensationselementes der Längenänderung der übrigen Halterungsvorrichtung vektoriell entgegengesetzt ist. In der Regel wird es auch notwendig sein, daß der thermische Ausdehnungskoeffizient des Kompensators größer ist als der der übrigen Materialien der Halterungsvorrichtung. Die beschriebene Ausführungsform beruht auf einem Kompensator, der die Kompensation aufgrund seiner thermischen Längenänderung vornimmt. Etwas aufwendiger, aber technisch ebenfalls realisierbar sind Kompensatoren, die entweder eine Längenmessung zwischen CCD-Chip und Linsensystem vornehmen oder die eine Temperaturmessung durchführen und daraufhin eine Abstandkorrektur vornehmen.

Das erfindungsgemäße System ist so konzipiert, daß vom Benutzer keine Fokussierung vorgenommen werden muß. Herstellerseitig wird jedoch eine Fokussierung vorgenommen. Diese Fokussierung erfolgt über das Stellrad (31), welches über die Zahnräder (30 a) und (30) eine am Linsensystem befindliche Gewindemutter dreht. Vorzugsweise wird das Linsensystem selbst gegen eine Verdrehung fixiert. Bedingt durch Fertigungstoleranzen kann das Linsensystem leichte Verzerrungen aufweisen, die nicht rotationssymmetrisch sind und somit bei einer Verdrehung des Linsensystems mitgedreht würden. Wird das Linsensystem hingegen gegen eine Verdrehung gesichert, so können eventuell vorhandene Inhomogenitäten durch Testproben ermittelt und gegebenenfalls durch die Auswerteeinheit kompensiert werden.

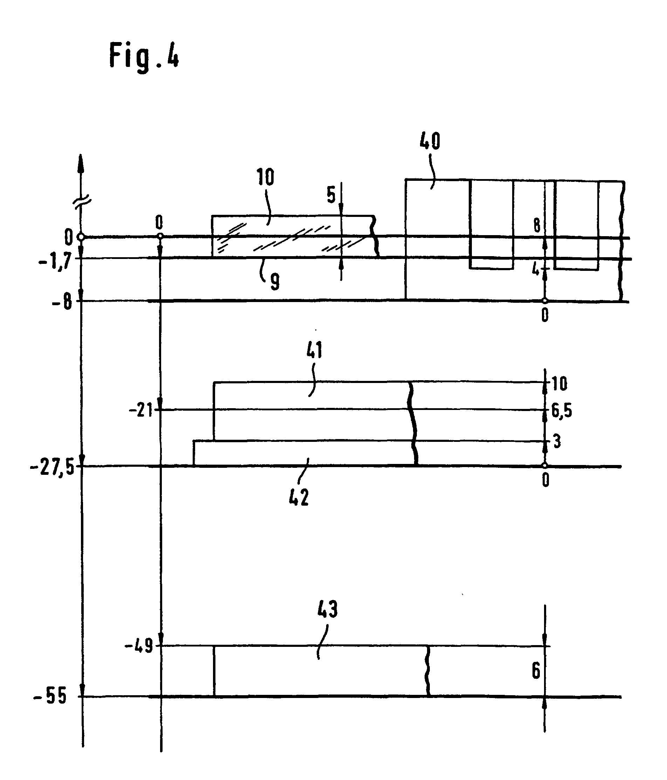

Figur 4 zeigt schematisch verschiedene Ebenen, die in einer Aufnahmeeinheit realisiert werden können. Die auf der Ordinate mit "0" gekennzeichnete Ebene ist 850 mm vom CCD-Chip entfernt. 1,7 mm unterhalb dieser Ebene befindet sich eine erste Platte, auf die Membranen zur Auswertung mittels einer Lumineszenzreaktion aufgelegt werden. Diese Ebene entspricht der Oberfläche der bereits in Figur 1 dargestellten Bodenplatte (9) der Schublade. Diese Ebene ist in ihrem Abstand so gewählt, daß das Bildaufnahmesystem für die häufig verwendete Lumineszenzwellenlänge von 460 nm optimale Bilder liefert. Mit dem erfindungsgemäßen System können jedoch nicht nur planare Testelemente ausgewertet werden, sondern auch beispielsweise Mikrotiterplatten (40) wie in Figur 4 schematisch dargestellt. Zur Auswertung der Mikrotiterplatte (40) kann in der Aufnahmeeinheit eine zweite Ebene vorgesehen werden, die sich in einem Abstand von 8 mm von der Nullinie befindet. Dieser Abstand ist so gewählt, daß bei in der Praxis auftretenden Flüssigkeitsständen in den Kavernen der Mikrotiterplatte Auswertungen durchgeführt werden können. Eine dritte Ebene ist bei - 27,5 mm eingezeichnet. Diese Position ist insbesondere zur Auswertung von Ethidiumbromidgelen (41) bei 600 nm geeignet. Da die Ethidiumbromidgele normalerweise innerhalb einer Wanne (42) ausgewertet werden, muß die Höhe der Wanne bei der Wahl der Ebene mit berücksichtigt werden. Eine vierte in der Figur 4 eingezeichnete Ebene ist für Fluoreszenzmessungen bei 700 nm gut geeignet. In der Figur 4 ist schematisch eine Platte (43) eingezeichnet, die elektrostatisch aufgeladen werden kann. Auf diese Platte können Membranen aufgelegt werden, so daß sie aufgrund der elektrostatischen Wechselwirkungen anhaften. Diese Art der Positionierung stellt, ähnlich wie die Glasplatte (10), sicher, daß die Membranen planar auf der Unterlage anliegen und keine Fehler durch Wellungen auftreten.

In der Figur 4 ist auf einer ersten Ordinate der Abstand zur Bezugsebene bzw. Nullebene dargestellt. Die rechts davon liegende Ordinate zeigt jeweils die verwendeten Fokalebenen an. Bei Verwendung von Membranen stimmen die Fokalebenen und die Auflagebenen im wesentlichen miteinander überein. Im Beispiel des Ethidiumbromidgeles (41) ist die Fokalebene bei - 21 mm so gewählt, daß sie in der Mitte durch das Gel verläuft.

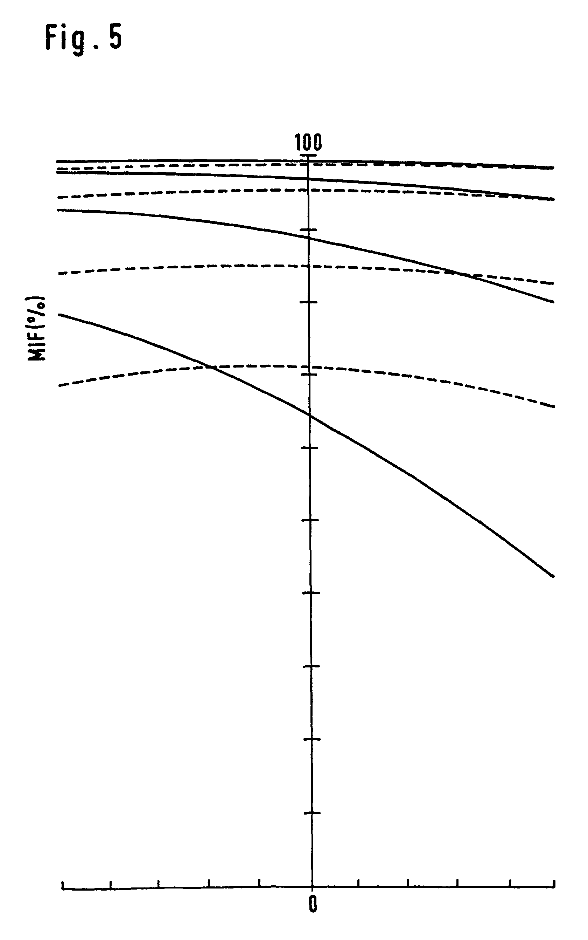

Figur 5 zeigt anhand eines Diagrammes, die Defokussierung des Bildaufnahmesystems bei Änderung des Abstandes zwischen der Ebene des CCD-Chips und dem Linsensystem. Auf der Ordinate ist die Fokussierung in der X-Richtung (durchgezogene Linien) und der Y-Richtung (gestrichelte Linien) für vier verschiedene Ortsfrequenzen dargestellt. Auf der Abzisse ist mit 0 die exakte Fokalebene dargestellt. Jeder Teilstrich auf der Abzisse kennzeichnet eine Abweichung von der Fokalebene um 2 µm. Aus Figur 5 ist daher zu entnehmen, wie genau für ein erfindungsgemäßes Linsensystem der Abstand zwischen CCD-Chip und Linsensystem konstant gehalten werden muß, um eine ausreichende Schärfe zu gewährleisten.

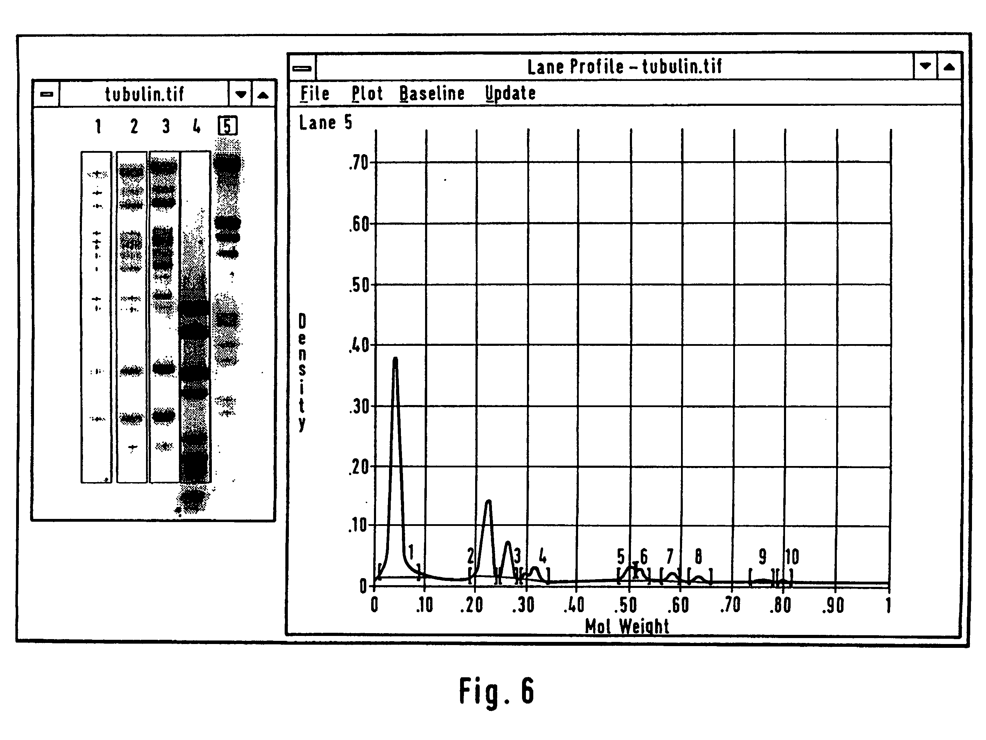

In Figur 6 ist ein Bildschirmausdruck der Darstellung eines DNA Chemilumineszenz Blots gezeigt. In der linken Bildhälfte ist die eigentliche Abbildung des DNA Chemilumineszenz Blots mit seinen Banden zu erkennen. Rechts davon sind die Intensitäten der Banden für die 5. Linie des Gels gezeigt. Mit einem Menue kann eine Bearbeitung der Auswertung vorgenommen werden.

### Bezugszeichenliste

- (1): Optik
- (2): Gehäuse
- (3): CCD-Chip
- (4): Peltierelemente
- (5): Linsensystem
- (6): Verschluß
- (7): Stromversorgung
- (8): Aufnahmeeinheit
- (9): Bodenfläche
- (10): Glasplatte
- (20): Einkapselung
- (21): Halterung für CCD-Chip
- (22): Abstandshalter
- (23): Montagerahmen
- (24): Heizwiderstand
- (25): Temperaturfühler
- (26): Kühlblech
- (27): optisches Fenster
- (28): erste Linse
- (29): Kühlblock
- (30): Zahnrad für Fokussierung
- (30a): Zahnrad für Fokussierung
- (31): Stellrad für Fokussierung
- (32): Flanschplatte
- (33): Stahlzylinder
- (34): Aluminiumzylinder
- (35): Befestigungsstelle des Stahlzylinders (33)
- (36): Befestigungsstelle des Aluminiumzylinders (34) am Stahlzylinder (33)
- (37): Gleitstelle Stahlzylinder (33) auf Aluminiumzylinder (34)
- (39): Führung
- (40): Mikrotiterplatte
- (41): Ethidiumbromidgel
- (42): Wanne

## Patentansprüche

1. Bildaufnahmesystem zur Bildaufnahme und Auswertung analytischer Testelemente beinhaltend
- eine Aufnahmeeinheit für Testelemente,
- ein Linsensystem, das ein Testelement in der Aufnahmeeinheit auf einen CCD-Chip abbildet,
- einen CCD-Chip, der ein Bild des Testelementes aufnimmt und an eine Auswerteeinheit weiterleitet,
- eine Auswerteeinheit, die die Signale des CCD-Chips in eine Darstellung eines Bildes des Testelementes umwandelt,
wobei der Fokus des Linsensystems fest eingestellt ist, das Linsensystem eine Verkleinerungsoptik mit einer bildseitigen Apertur von mindestens 0,7 ist, der Abstand zwischen CCD-Chip und nächster Linse des Linsensystems kleiner als 15 mm ist und dieser Abstand auf mindestens 10 µm konstant gehalten wird.

2. Bildaufnahmesystem gemäß Anspruch 1, bei dem der Abstand zwischen der dem CCD-Chip nächsten Linse des Linsensystems und dem CCD-Chip kleiner als 12 mm ist.

3. Bildaufnahmesystem gemäß Anspruch 1, bei dem der Radius der Blende des Linsensystems größer als 25 mm, vorzugsweise größer als 30 mm ist.

4. Bildaufnahmesystem gemäß Anspruch 1, bei dem die bildseitige Apertur mindestens 1,0 ist.

5. Bildaufnahmesystem gemäß Anspruch 1, bei dem die thermisch bedingte Abstandsänderung zwischen Linsensystem und CCD-Chip zumindest teilweise durch einen Kompensator kompensiert wird.

6. Bildaufnahmesystem gemäß Anspruch 5, bei dem das Linsensystem oder der CCD-Chip auf dem Kompensator gelagert ist, der seinerseits auf der Halterung von Linsensystem oder CCD-Chip lagert.

7. Bildaufnahmesystem gemäß Anspruch 5, bei dem der Kompensator aufgrund seines thermischen Ausdehnungskoeffizienten eine Bewegung von Linsensystem oder CCD-Chip hervorruft, die der thermischen Längenänderung der Halterung von Linsensystem und CCD-Chip vektoriell entgegengesetzt ist.

8. Bildaufnahmesystem gemäß Anspruch 6, bei dem der Kompensator aus Aluminiummetall besteht.

9. Bildaufnahmesystem gemäß Anspruch 5, bei dem der Kompensator eine Änderung des Abstandes zwischen Linsensystem und CCD-Chip vornimmt, um eine scharfe Abbildung zu erreichen.

10. Bildaufnahmesystem gemäß Anspruch 9, bei dem der Kompensator ein Motorantrieb, ein Piezoantrieb oder eine Hydraulik ist.

11. Bildaufnahmesystem gemäß Anspruch 1, bei dem der CCD-Chip eingekapselt ist.

12. Bildaufnahmesystem gemäß Anspruch 11, bei dem sich in der Einkapselung ein Feuchte absorbierendes Material befindet.

13. Bildaufnahmesystem gemäß Anspruch 11, mit einem beheizbaren Fenster.

14. Bildaufnahmesystem gemäß Anspruch 1, mit einer Vorrichtung zur Justierung des Fokus ohne Verdrehung des Linsensystems um die optische Achse.

15. Bildaufnahmesystem gemäß Anspruch 1, bei dem die Aufnahmeeinheit zwei oder mehr Aufnahmepositionen in unterschiedlichen Abständen zum Linsensystem besitzt.

16. Bildaufnahmesystem gemäß Anspruch 1, bei dem die Aufnahmeeinheit eine Bewegungsvorrichtung beinhaltet, mit der der Abstand zwischen Testelement und Linsensystem verändert wird.

17. Bildaufnahmesystem gemäß Anspruch 1, bei dem die Testelemente Gele, Membranen oder Mikrotiterplatten sind.

18. Bildaufnahmesystem gemäß Anspruch 1, mit einer Beleuchtungseinheit zur Beleuchtung des analytischen Testelementes.

19. Bildaufnahmesystem gemäß Anspruch 1, bei dem sich Testelement, Linsensystem und CCD-Chip in einem lichtdichten Gehäuse befinden.

20. Verwendung eines Bildaufnahmesystems zur Bildaufnahme und Auswertung gemäß Anspruch 1 zur Aufnahme und Auswertung von Membranen auf Basis von Chemilumineszenz-Signalen.

21. Verwendung eines Bildaufnahmesystems zur Bildaufnahme und Auswertung gemäß Anspruch 1 zur Aufnahme und Auswertung von Membranen auf Basis von Fluoreszenz-Signalen.

22. Verwendung eines Bildaufnahmesystems zur Bildaufnahme und Auswertung gemäß Anspruch 1 zur Aufnahme und Auswertung von Mikrotiterplatten auf Basis von Chemilumineszenz-Signalen.

## Claims

1. Image recording system for the image recording and evaluation of analytical test elements comprising
- a holding unit for test elements,
- a lens system which forms an image of a test element in the holding unit on a CCD chip,
- a CCD chip which records an image of the test element and passes it on to an evaluation unit,
- an evaluation unit which converts the signals of the CCD chip into a representation of an image of the test element,
wherein the focus of the lens system is permanently set, the lens system is a reducing optical system with an aperture on the image side of at least 0.7, the distance between the CCD chip and the nearest lens of the lens system is less than 15 mm and this distance can be kept constant to at least 10 µm.

2. Image recording system as claimed in claim 1, in which the distance between the nearest lens of the lens system to the CCD chip and the CCD chip is less than 12 mm.

3. Image recording system as claimed in claim 1, in which the radius of the aperture of the lens system is larger than 25 mm, preferably larger than 30 mm.

4. Image recording system as claimed in claim 1, in which the aperture on the image side is at least 1.0.

5. Image recording system as claimed in claim 1, in which the heat-dependent change in the distance between the lens system and CCD chip is at least partially compensated by a compensator.

6. Image recording system as claimed in claim 5, in which the lens system or the CCD chip is mounted on the compensator which in turn rests on the holder of the lens system or CCD chip.

7. Image recording system as claimed in claim 5, in which the compensator causes a movement of the lens system or CCD chip due to its thermal coefficient of expansion which is vectorially opposed to the thermal change in length of the holder of the lens system and CCD chip.

8. Image recording system as claimed in claim 6, in which the compensator is composed of aluminium metal.

9. Image recording system as claimed in claim 5, in which the compensator changes the distance between the lens system and CCD chip in order to achieve a sharp image.

10. Image recording system as claimed in claim 9, in which the compensator is a motor drive, a piezo drive or hydraulics.

11. Image recording system as claimed in claim 1, in which the CCD chip is encapsulated.

12. Image recording system as claimed in claim 11, in which a moisture-absorbing material is located in the encapsulation.

13. Image recording system as claimed in claim 11, with a heatable window.

14. Image recording system as claimed in claim 1, with a device for adjusting the focus without rotating the lens system around the optical axis.

15. Image recording system as claimed in claim 1, in which the holding unit has two or several holding positions at different distances to the lens system.

16. Image recording system as claimed in claim 1, in which the holding unit contains a movement device which changes the distance between the test element and lens system.

17. Image recording system as claimed in claim 1, in which the test elements are gels, membranes or microtitre plates.

18. Image recording system as claimed in claim 1, with an illumination unit for illuminating the analytical test element.

19. Image recording system as claimed in claim 1, in which the test element, lens system and CCD chip are located in a lightproof housing.

20. Use of an image recording system for image recording and evaluation as claimed in claim 1 to record and evaluate membranes on the basis of chemiluminescence signals.

21. Use of an image recording system for image recording and evaluation as claimed in claim 1 to record and evaluate membranes on the basis of fluorescence signals.

22. Use of an image recording system for image recording and evaluation as claimed in claim 1 to record and evaluate microtitre plates on the basis of chemiluminescence signals.

## Revendications

1. Système de prise de vues pour la prise de vues et l'évaluation d'éléments d'essais analytiques comprenant
- une unité de prise de vues pour éléments d'essais
- un système de lentilles, qui représente un élément d'essais dans l'unité de prisé de vues sur une puce CCD,
- une puce CCD, qui prend une image de l'élément d'essais et la transmet à une unité d'évaluation,
- une unité d'évaluation, qui convertit les signaux de la puce CCD en une représentation d'une image de l'élément d'essais,
le foyer du système de lentilles étant fixe, le système de lentilles étant une optique de réduction pourvue d'une ouverture côté image d'au moins 0,7, la distance entre la puce CCD et la lentille suivante du système de lentilles étant inférieure à 15 mm et cette distance étant maintenue constante à au moins 10 µm.

2. Système de prise de vues selon la revendication 1, dans lequel la distance entre la lentille proche de la puce CCD du système de lentilles et la puce CCD est inférieure à 12 mm.

3. Système de prise de vues selon la revendication 1, dans lequel le rayon du diaphragme et du système de lentilles est supérieur à 25 mm, de préférence supérieur à 30 mm.

4. Système de prise de vues selon la revendication 1, dans lequel l'ouverture côté image est d'au moins 1,0.

5. Système de prise de vues selon la revendication 1, dans lequel la variation de distance due à des effets thermiques entre le système de lentilles et la puce CCD est compensée au moins en partie par un compensateur.

6. Système de prise de vues selon la revendication 5, dans lequel le système de lentilles ou la puce CCD est logé sur le compensateur, lui-même logé sur la fixation du système de lentilles ou la puce CCD.

7. Système de prise de vues selon la revendication 5, dans lequel le compensateur engendre un mouvement du système de lentilles ou de la puce CCD en raison de son coefficient de dilatation thermique, qui est vectoriellement opposé à la variation de longueur thermique du support du système de lentilles et de la puce CCD.

8. Système de prise de vues selon la revendication 6, dans lequel le compensateur est en métal d'aluminium.

9. Système de prise de vues selon la revendication 5, dans lequel le compensateur modifie la distance entre le système de lentilles et la puce CCD, afin d'obtenir une image nette.

10. Système de prise de vues selon la revendication 9, dans lequel le compensateur est une motorisation, un entraînement piézo-électrique ou un système hydraulique.

11. Système de prise de vues selon la revendication 1, dans lequel la puce CCD est encapsulée.

12. Système de prise de vues selon la revendication 11, dans lequel un matériau absorbant l'humidité se trouve dans l'encapsulage.

13. Système de prise de vues selon la revendication 11, équipé d'une fenêtre chauffable.

14. Système de prise de vues selon la revendication 1, équipé d'un dispositif d'ajustage du foyer sans torsion du système de lentilles autour de l'axe optique.

15. Système de prise de vues selon la revendication 1, dans lequel l'unité de prise de vues possède deux positions de prise de vues ou plus à différentes distances du système de lentilles.

16. Système de prise de vues selon la revendication 1, dans lequel l'unité de prise de vues comporte un dispositif de déplacement avec lequel la distance entre l'élément d'essais et le système de lentilles est modifié.

17. Système de prise de vues selon la revendication 1, dans lequel les éléments d'essais sont des gels, des membranes ou des plaques de microtitrage.

18. Système de prise de vues selon la revendication 1, équipé d'une unité d'éclairage de l'élément d'essais analytique.

19. Système de prise de vues selon la revendication 1, dans lequel l'élément d'essais, le système de lentilles et la puce CCD se trouvent dans un boîtier étanche à la lumière.

20. Utilisation d'un système de prise de vues pour la prise de vues et l'évaluation selon la revendication 1, pour la prise de vues et l'évaluation de membranes sur la base de signaux chimiluminescents.

21. Utilisation d'un système de prise de vues pour la prise de vues et l'évaluation selon la revendication 1, pour la prise de vues et l'évaluation de membranes sur la base de signaux fluorescents.

22. Utilisation d'un système de prise de vues pour la prise de vues et l'évaluation selon la revendication 1, pour la prise de vues et l'évaluation de plaques de microtitrage sur la base de signaux chimiluminescents.
